# EUROPEAN PATENT APPLICATION

(11) **EP 3 062 549 A1**
(43) Date of publication of application: **31.08.2016**
(21) Application number: 15305307.9
(22) Date of filing: 27.02.2015
(51) Int. Cl.: H04W 24/02

(54) **NETWORK NODE AND METHOD**

(71) Applicant: ALCATEL LUCENT, 92100 Boulogne-Billancourt (FR)
(72) Inventor: Casati, Alessio, Swindon, Wiltshire SN5 7DJ (GB)
(74) Representative: Coghlan, Judith Elizabeth Kensy

(57) **Abstract**

Aspects and embodiments described may provide: a method of identifying a network node to operate as a local core network for a wireless access network node within a group of mutually reachable wireless access network nodes; a wireless access node and computer program product operable to perform that method; and a method of declaring a network node to be a local core network node for a wireless access network node within a group of mutually reachable wireless access network nodes; a network node and computer program product operable to perform that method. The method of identifying a network node to operate as a local core network for a wireless access network node within a group of mutually reachable wireless access network nodes comprises: determining, at the wireless access network node, that access to a central core network is prevented; transmitting a discovery message including an indication that the wireless access node is seeking a local core network to candidate local core network nodes; awaiting receipt of a discovery message acknowledgement comprising a selection indicator from at least one of the candidate local core network nodes; assessing, based on the selection indicator included in the received discovery message acknowledgement from at least one of the candidate local core network nodes, which of the candidate local core network nodes from which a discovery message acknowledgement has been received is to be selected as the local core network node; transmitting a local core network node selection message including an indication of the selected local core network node to the candidate local core network nodes; and awaiting receipt of an acknowledgement of the local core network node selection message from the selected local core network node. Aspects described herein recognise that radio access network nodes, for example, eNodeBs, which are isolated from the rest of the world (i.e. do not have backhaul connection to a core network) can still be used within a network environment to extend the reach of communication beyond what may be available in a basic user equipment device-to-device communication arrangement.

## Description

### FIELD OF THE INVENTION

Aspects and embodiments described may provide: a method of identifying a network node to operate as a local core network for a wireless access network node within a group of mutually reachable wireless access network nodes; a wireless access node and computer program product operable to perform that method; and a method of declaring a network node to be a local core network node for a wireless access network node within a group of mutually reachable wireless access network nodes; a network node and computer program product operable to perform that method.

### BACKGROUND

Wireless telecommunications networks are known. In such networks, radio coverage is provided to user equipment (for example, mobile telephones and other network connectible devices) by regions of geographical area known as radio cells. A radio network access node, for example a base station, is located in each cell to provide the required radio coverage. User equipment in the geographical area covered by a base station is operable to receive information from that base station and transmit information and data to the base station.

Information and data transmitted by base stations to user equipment occurs on radio links known as downlinks. Information and data transmitted by user equipment to base stations occurs on radio links known as uplinks. In known wireless telecommunication networks, the network operates such that communication between pairs of user equipment and base stations is facilitated by a backhaul communication link or communication link to a so-called "core network" which facilitates communication between base stations.

In known wireless systems the core network can route communication between radio access nodes by means of, for example, the Domain Name System (DNS). In particular, the core network uses DNS to interpret, for example, radio access node names and translate them into Internet Protocol (IP) addresses.

When a core network is unavailable to a wireless radio access node, operation of the wireless network may be compromised. Accordingly, it is desired to provide alternative means of operation of a wireless telecommunication network.

### SUMMARY

According to a first aspect, there is provided: a method of identifying a network node to operate as a local core network for a wireless access network node within a group of mutually reachable wireless access network nodes; the method comprising: determining, at the wireless access network node, that access to a central core network is prevented; transmitting a discovery message including an indication that the wireless access node is seeking a local core network to candidate local core network nodes; awaiting receipt of a discovery message acknowledgement comprising a selection indicator from at least one of the candidate local core network nodes; assessing, based on the selection indicator included in the received discovery message acknowledgement from at least one of the candidate local core network nodes, which of the candidate local core network nodes from which a discovery message acknowledgement has been received is to be selected as the local core network node; transmitting a local core network node selection message including an indication of the selected local core network node to the candidate local core network nodes; and awaiting receipt of an acknowledgement of the local core network node selection message from the selected local core network node.

It has been recognised that operation of a wireless communication network depends upon availability of a suitable core network which serves to connect all wireless access points within the wireless communication network. It is recognised that there are occasions, for example, emergency events or environmental disasters, in which the connection of one or more wireless access nodes to a core network may be disrupted. It is recognised that it maybe possible for wireless access nodes to be configured to operate as an isolated network. In particular, a group of mutually contactable wireless access nodes may configure themselves such that they form an isolated network within a network. In particular, the provision of such an isolated network within a network may allow services to be provided to user equipment and other network connectible devices in scenarios in which there is no backhaul available.

The first aspect recognises that in wireless systems a core network is typically operable to identify and take actions in relation to radio access nodes by means of provisioning or resolution of radio access node "names" by means of DNS. The first aspect recognises that in some circumstances core network nodes and the DNS may become unreachable. Such a failure of the DNS may occur due to transport failures. The first aspect recognises that in some circumstances, groups of radio access nodes may be mutually reachable. Such a group of mutually reachable radio access nodes may be configured to constitute an isolated network. However, such a group of radio access nodes may be unable to offer any service to user equipment, since they are not likely to be connected to a core network which can enable the radio access nodes to resolve names via DNS.

The first aspect can provide a means by which a group of mutually reachable radio access nodes can operate as a micro network. Aspects may provide that a group of mutually reachable radio access nodes operate to select a common "local core". That local core may be utilised when the normal core is unavailable. Furthermore, a local core maybe deployed within a network in strategic locations and brought into service when the normal core is unavailable.

Accordingly, the first aspect may provide a means for supporting micro networks within a network in emergency situations. The first aspect may also be used to enable plug-and-play operation of deployable systems or enterprise solutions based on operation of an isolated system from large operator networks.

In one embodiment, the discovery message comprises a multicast message including a wireless access node identifier. Accordingly, other network nodes, including wireless access nodes and candidate local core network nodes may be configured to "listen" for any transmissions made on a multicast or broadcast address. Furthermore, inclusion of a wireless access node identifier may allow other nodes in a network to determine the node from which any broadcast or multicast transmission is made. Use of a multicast address may allow for an isolated network to operate in relation to appropriately configured nodes in the network.

In one embodiment, the discovery message acknowledgement is addressed to the wireless access node. Accordingly, directed messaging may be used to establish communication between appropriate nodes in a network, such that an appropriate local core node is selected.

In one embodiment, the local core network selection message is transmitted using identical resource to that which was used for transmission of the discovery message. Accordingly, the selection messaging may be transmitted using the same multicast address or resource used to send the initial discovery message. This can help to ensure that those nodes, both other wireless access nodes and candidate local core network nodes, which were operable to receive the initial messaging are likely to receive the later messaging which establishes the selected local core network node.

In one embodiment, the acknowledgement of the local core network node selection message comprises a configuration request message, seeking configuration information from the wireless access node. Accordingly, a selected local core network node may request, and then receive, information from wireless access nodes within a group of such nodes. That information may assist the selected local core network node when establishing efficient operation, for example, routing traffic between nodes, of the isolated network.

In one embodiment, the method comprises: monitoring for transmission of a discovery message by another wireless access node and only transmitting a discovery message to the candidate local core network nodes if it is determined that discovery message transmission parameters have been met. Accordingly, by listening for appropriate messaging within a network, duplication of messaging can be mitigated. If, for example, all wireless access nodes within a group are located such that there is full mutual reachability, it may be inefficient for every wireless access node to issue a discovery request. Accordingly, if a wireless access node determines that another wireless access node has sent a discovery message, it may choose not to send one itself.

In one embodiment, the method comprises: monitoring for receipt of an isolated network heartbeat signal from the selected local core network node, and, if it is not received, determining, at the wireless access network node, that access to the local core network is prevented. Accordingly, once a local isolated network is established, nodes forming part of that network may monitor ongoing availability of the selected local core network node. If it is established that the local network node is unavailable, steps according to the method set out above may be repeated to select a new local core network node.

In one embodiment, the candidate local core network nodes comprise Mobility Management Entity nodes and the wireless access network node comprises an eNodeB. The wireless access nodes and candidate local core network nodes may be co-located or may comprise distinct and separate nodes within a network.

A second aspect provides: a computer program product configured, when executed on a computer, to perform the method of the first aspect.

A third aspect provides a wireless access network node configured to identify a network node to operate as a local core network for the wireless access network node within a group of mutually reachable wireless access network nodes; the wireless access network node comprising: determination logic operable to determine that access to a central core network is prevented; discovery transmission logic operable to transmit a discovery message including an indication that the wireless access node is seeking a local core network to candidate local core network nodes; discovery reception logic operable to await receipt of a discovery message acknowledgement comprising a selection indicator from at least one of the candidate local core network nodes; assessment logic operable to assess, based on the selection indicator included in the received discovery message acknowledgement from at least one of the candidate local core network nodes, which of the candidate local core network nodes from which a discovery message acknowledgement has been received is to be selected as the local core network node; selection transmission logic operable to transmit a local core network node selection message including an indication of the selected local core network node to the candidate local core network nodes; and acknowledgment reception logic operable to await receipt of an acknowledgement of the local core network node selection message from the selected local core network node.

In one embodiment, the discovery message comprises a multicast message including a wireless access node identifier.

In one embodiment, the discovery message acknowledgement is addressed to the wireless access node.

In one embodiment, the local core network selection message is transmitted using identical resource to that which was used for transmission of the discovery message.

In one embodiment, the acknowledgement of the local core network node selection message comprises a configuration request message, seeking configuration information from the wireless access node.

In one embodiment, the wireless access node comprises: monitoring logic operable to monitor for transmission of a discovery message by another wireless access node and only transmit a discovery message to the candidate local core network nodes if it is determined that discovery message transmission parameters have been met.

In one embodiment, the wireless access node comprises: monitoring logic operable to monitor for receipt of an isolated network heartbeat signal from the selected local core network node, and, if it is not received, to determine that access to the local core network is prevented.

In one embodiment, the candidate local core network nodes comprise Mobility Management Entity nodes and the wireless access network node comprises an eNodeB.

A fourth aspect provides a method of declaring a network node to be a local core network node for a wireless access network node within a group of mutually reachable wireless access network nodes; the method comprising: determining, at the network node, that access to a central core network by the wireless access network node is prevented; receiving a discovery message including an indication that the wireless access node is seeking a local core network node to candidate local core network nodes; transmitting a discovery message acknowledgement comprising a selection indicator to the wireless access node; receiving a local core network node selection message including an indication of a selected local core network node from the wireless access node, the selected local core network node having been determined by the wireless access node by assessing which of the candidate local core network nodes from which a discovery message acknowledgement has been received based on the selection indicator included in the received discovery message acknowledgement from at least one of the candidate local core network nodes; and if the network node is the selected local core network node, transmitting an acknowledgement of the local core network node selection message to the wireless access node.

In one embodiment, the acknowledgement of the local core network node selection message comprises a configuration request message, seeking configuration information from the wireless access node. Accordingly, the selected local core network node may request, and subsequently obtain, information from other nodes in the network which can assist with setting up efficient communication routes within the isolated network.

In one embodiment, the method comprises: monitoring for transmission of a discovery message acknowledgement comprising a selection indicator by another candidate local core network node and only transmitting a discovery message acknowledgement to the wireless access node if it is determined that a discovery message acknowledgement transmission parameter has been met in comparison to received monitored discovery message acknowledgements. Accordingly, if a candidate node determines that another candidate node has, for example, a greater core node identifier or suitability ranking, and has already responded to the discovery request, there maybe no need for the candidate core network node to respond to the discovery request itself.

In one embodiment, the method comprises: if the network node is the selected local core network node, transmitting an isolated network heartbeat signal to other nodes in the group of mutually reachable wireless access network nodes. Accordingly, such a signal can be used by nodes to monitor the ongoing availability of a local core network node within an isolated network.

A fifth aspect provides a computer program product configured, when executed on a computer, to perform the method of the fourth aspect.

A sixth aspect provides a network node configured to declare itself to be a local core network node for a wireless access network node within a group of mutually reachable wireless access network nodes; the network node comprising: determination logic configured to determine that access to a central core network by the wireless access network node is prevented; reception logic operable to receive a discovery message including an indication that the wireless access node is seeking a local core network node to candidate local core network nodes; transmission logic operable to transmit a discovery message acknowledgement comprising a selection indicator to the wireless access node; selection reception logic operable to receive a local core network node selection message including an indication of a selected local core network node from the wireless access node, the selected local core network node having been determined by the wireless access node by assessing which of the candidate local core network nodes from which a discovery message acknowledgement has been received based on the selection indicator included in the received discovery message acknowledgement from at least one of the candidate local core network nodes; and selection transmission logic operable, if the network node is the selected local core network node, to transmit an acknowledgement of the local core network node selection message to the wireless access node.

In one embodiment, the acknowledgement of the local core network node selection message comprises: a configuration request message, seeking configuration information from the wireless access node.

In one embodiment, the network node comprises: monitoring logic operable to monitor for transmission of a discovery message acknowledgement comprising a selection indicator by another candidate local core network node and only transmit a discovery message acknowledgement to the wireless access node if it is determined that a discovery message acknowledgement transmission parameter has been met in comparison to received monitored discovery message acknowledgements.

In one embodiment, if the network node is the selected local core network node, transmission logic is operable to transmit an isolated network heartbeat signal to other nodes in the group of mutually reachable wireless access network nodes.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:

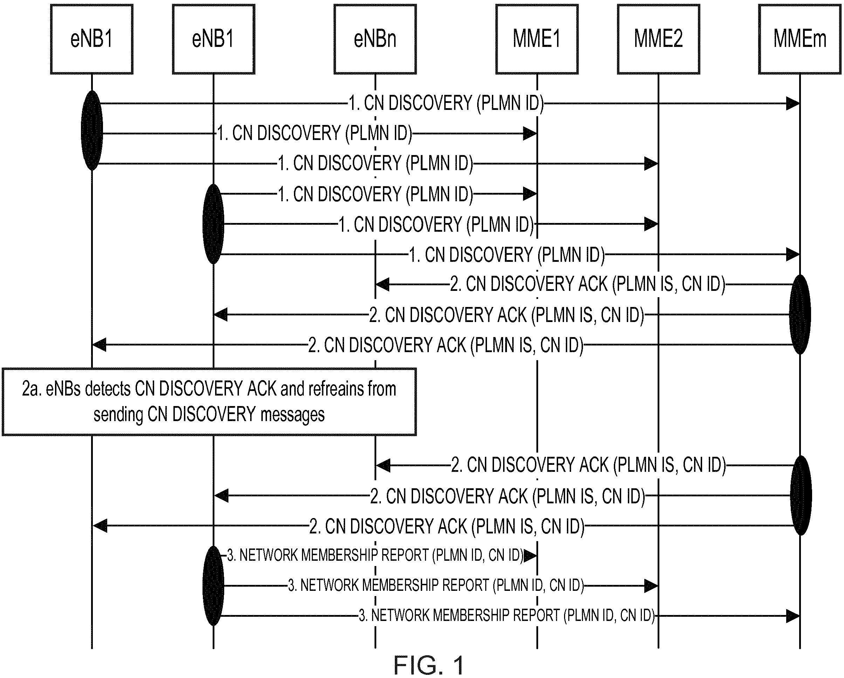

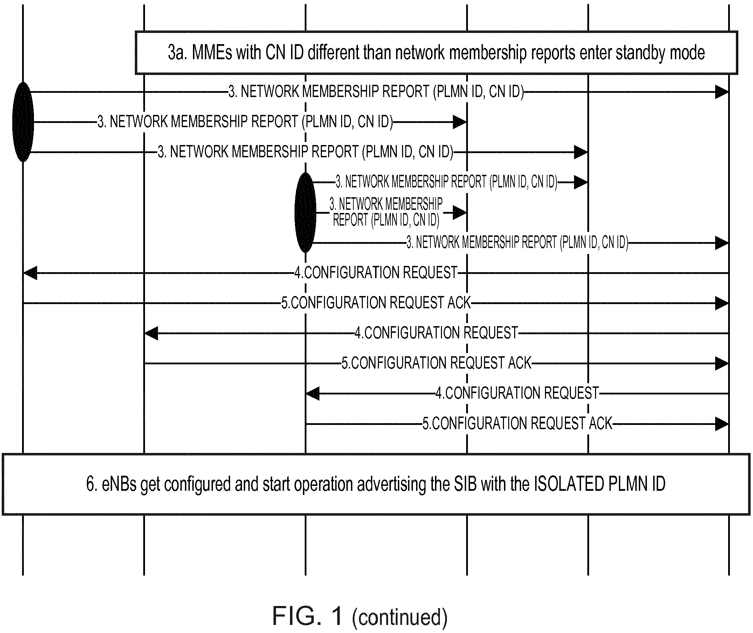

Figure 1 is a signalling diagram illustrating schematically steps according to one arrangement.

### DESCRIPTION OF THE EMBODIMENTS

Before discussing the embodiments in any more detail, first an overview will be provided. According to some aspects and embodiments, a method may be provided according to which:
If a Radio Access Network (RAN) node loses connection with a core node, it maybe operable to stop ongoing operation. That is to say, it may be operable to stop emitting system information and drop all ongoing traffic. Having stopped active operation, the Radio Access Network node operable in accordance with principles of aspects described herein may be operable to try to connect to any available Core Network (CN) node. The Radio Access Network node may operate to connect to any CN node with which it is configured to operate. If no core network node is reachable, or the Radio Access Network node is not configured with more than one Core Network node listing, the Radio Access Network node may be operable to enter an "isolated RAN" mode, according to which the following steps may be executed:
If a RAN node is in isolated RAN mode it may be operable to issue a "core node discovery" message on a known multi-cast address. That CN discovery message may include an indication of the RAN node isolated PLMN-ID.

Each RAN node may be configured with an isolated PLMN-ID (a Public Land Mobile Network Identifier).

Any Core Network nodes which are configured to serve the value of isolated PLMN-ID which might be included in CN discovery messages may be operable to reply to a different multi-cast address with a "CN discovery acknowledgement" message. That CN discovery acknowledgement message may include a CNID value. That identifier may comprise an integer value configured in the CN node which is unique and paired with an isolated PLMN-ID. The CN discovery acknowledgement message may also include the value of the isolated PLMN-ID that the Core Network node has received.

RAN nodes operating in isolated RAN mode that receive a CN discovery acknowledgement message in relation to their isolated PLMN-ID may operate to stop sending CN discovery messages. Such RAN nodes may then be operable to wait for a preconfigured time and then select the Core Network node which has the highest CN identifier. That identifier then becomes the selected core node identifier. The RAN node operating in isolated RAN mode acknowledges the selected core node identifier by communicating the selected core node identifier value and its own PLMN-ID. The acknowledgement forms part of a network membership report message and is transmitted to the same multi-cast address on which it issued its original core node discovery message. Such an approach may allow the selected Core Network node to be confirmed and to start operation in support of an isolated system. Any Core Network nodes which are not selected may operate to "stand by", so that they are ready to participate in any future Core Network discovery events.

The "selected CN" node is operable to configure those RAN nodes in the network which has been established by responding to each received network membership report message with a configuration request message. The configuration request messages are sent to each source address of the network membership report messages.

Those RAN nodes that receive configuration requests may be operable to respond with a configuration request acknowledgement message. Response with a configuration request acknowledgement message triggers the selected CN node to act to initiate potential Operation Administration and Maintenance (OAM) transactions. When the RAN nodes are ready, they begin by operating to advertise in their system information their isolated PLMN-ID as supported in isolated mode.

It will, of course, be appreciated that each message referred to in the general overview set out above may need to be integrity protected in some implementations with a signature derived using approaches which do not constitute a material aspect of aspects and embodiments described herein.

It may also be appreciated that Core Network nodes and Radio Access Network nodes may be operable to listen to all well-known multicast addresses and may stop sending messages, or discard messages they receive on those addresses, if they are deemed not to be useful. For example, if it is assumed that full mutual reachability between RAN nodes is possible, then it may be determined that it is not useful for all RAN nodes to send out CN discovery messages. As a result, RAN nodes may be operable not to send out such a message if they see that others have done so. Furthermore, CN nodes with a smaller CN ID may operate such that they determine they do not need to respond to a CN discovery message if they can determine that another CN node with a greater CN ID has already responded to the RAN nodes with a CN discovery acknowledgement message.

Some arrangements are such that a single well known multicast address is used for all messages which are sent via multicast.

It will be appreciated that establishment of security within transactions and exactly which configuration information is provided within messages is outside the scope of aspects and embodiments described herein.

Figure 1 is a signalling diagram illustrating schematically a method in accordance with one possible arrangement.

The embodiment depicted in Figure 1 sets out example steps for one arrangement in accordance with some aspects and embodiments described herein. The scenario shown schematically in Figure 1 occurs in an evolved packet system network in which the Radio Access Network nodes comprise eNodeBs (eNBs) and the Core Network nodes comprise Mobility Management Entities (MMEs).

In the example shown in Figure 1, there are several eNodeBs; eNB1, eNB2 and eNBn. Similarly, the network shown schematically in Figure 1 comprises a plurality of Mobility Management Entities; MME1, MME2 and MMEm.

As shown in Figure 1, if an eNodeB loses connection to an MME, it stops operation. That is to say, it stops emitting system information and drops all ongoing traffic. That eNodeB is then operable to try to connect any available MME node with which it is configured to operate with. If no configured MME node is reachable, or none of the MME nodes with which it is configured are reachable, then the eNodeB may be operable to enter isolated RAN mode and perform, for example, the following steps:
Each eNodeB which cannot make contact with the Core Network flicks to operate in an isolated RAN mode. As part of that mode of operation, the eNodeB issues a core node discovery message. That core node discovery message is transmitted on a known multicast address which is monitored by, for example, various MMEs within a network. The CN discovery message issued by an eNodeB includes an indication of that eNodeB's identity. That identity may comprise an isolated PLMN-ID. Each eNodeB may be preconfigured with such an isolated network identifier.

As shown schematically in Figure 1, eNB1 transmits on a multicast address a CN discovery message. That message may be received by any one, or all of, MME1, MME2 and MMEm. Similarly, eNB2 is also operable to transmit a CN discovery message including its PLMN-ID to a multicast address and that message may also be received by one or more of MME1, MME2 and MMEm.

MMEs which are configured to serve the value of isolated PLMN-ID received in the CN discovery messages may operate to reply using a preconfigured multicast address. That multicast address may be different to the multicast address used by the eNodeBs to send the CN discovery messages. The MMEs may operate to respond to the eNodeBs with a core node discovery acknowledgement message. That step is shown schematically in Figure 1 and labelled as Step 2. In the example shown, MMEm responds to eNB1, eNB2 and eNBn with a CN discovery ack message. The CN discovery ack message includes the MME core node identifier value. That value may be preconfigured in each MME and be unique for each isolated PLMN-ID sent to that MME by various eNodeBs.

eNodeBs operating in isolated RAN mode may receive a CN discovery ack message in relation to the isolated PLMN-ID which they transmitted to MMEs. When they receive such a discovery acknowledgement message they may operate to stop sending the CN discovery messages. That step of stopping sending CN discovery messages is shown schematically as Step 2a in Figure 1. It will be appreciated, though it is not shown in Figure 1, that an eNodeB may receive more than one CN discovery acknowledgement message. That is to say, an eNodeB may receive an acknowledgement from more than one MME. Once an eNodeB has received at least one CN discovery acknowledgement message it may be operable to wait for a certain configurable time before selecting the MME with the core node identifier having the highest value. That "highest value" may comprise the message from an MME which was received with the highest signal strength or some other configurable operational parameter. The selected CN ID is thereafter known as the selected CN ID. The eNodeBs, once they have selected a core node identity, may acknowledge that selection to the MMEs by communicating the selected CN identifier value and their PLMN-ID in a network membership report message. That network report message is sent from an eNodeB to each of the MMEs by means of a multicast message using the same multicast address on which the original CN discovery message was sent. Such an approach may allow the selected CN node to be confirmed and for operation of an isolated network to commence. Any Core Network nodes which were not selected (in the example shown, neither MME1 or MME2 were the selected core node) operate such that they are in "standby", ready to participate in any future CN discovery events, but not acting as a core node in relation to the isolated system being set up in this instance.

The selected MME (in this instance, MMEm) may operate to configure eNodeBs in the established network (in this instance, eNB1, eNB2 and eNBn). The MME may perform that configuration by responding to each received network membership report with a configuration request. That step is shown as Step 4 in Figure 1. The configuration request message may be sent to each source of address of the network membership reports received at Step 3 shown in Figure 1.

It will be appreciated that the selected MME may wish to configure eNodeBs within the isolated network; for example, based upon location area ID information which maybe based on, for example, a declaration of each eNB configured or detected location. Those eNodeBs which have received confirmation request messages respond with a configuration request acknowledgement message. This is illustrated schematically in Figure 1 at Step 5.

Once configuration request messages have been responded to with configuration request acknowledgement messages, potential OAM transactions and security within the new standalone network can be set up. When Radio Access Nodes are ready (in this instance, the eNodeBs) they may begin operating by advertising on system information the isolated PLMN-ID which they support in isolated mode. That step is illustrated schematically as Step 6 in Figure 1.

It will be appreciated that in some environments it can be advantageous to allow network access nodes within a network to dynamically configure an isolated evolved UTRAN mode of operation, particularly in instances where connectivity to a core network is lost. Such methods may be deployed in systems where there is a dynamic association of eNodeBs to a core network; that is to say, arrangements in which there is no static node configuration. Additionally, aspects and embodiments may be used in relation to standalone isolated systems.

Aspects and embodiments may support the effective deployment of back-up core network nodes in scenarios in which transport failures occur and a standard core network is unavailable.

Aspects described herein recognise that radio access network nodes, for example, eNodeBs, which are isolated from the rest of the world (i.e. do not have backhaul connection to a core network) can still be used within a network environment to extend the reach of communication beyond what may be available in a basic user equipment device-to-device communication arrangement. Extension of the reach of communications maybe of particular use in a disaster scenario in which communication may be enabled despite overall network disruption.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices maybe, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of identifying a network node to operate as a local core network for a wireless access network node within a group of mutually reachable wireless access network nodes; said method comprising:
determining, at said wireless access network node, that access to a central core network is prevented;
transmitting a discovery message including an indication that said wireless access node is seeking a local core network to candidate local core network nodes;
awaiting receipt of a discovery message acknowledgement comprising a selection indicator from at least one of said candidate local core network nodes;
assessing, based on said selection indicator included in said received discovery message acknowledgement from at least one of said candidate local core network nodes, which of said candidate local core network nodes from which a discovery message acknowledgement has been received is to be selected as said local core network node;
transmitting a local core network node selection message including an indication of said selected local core network node to said candidate local core network nodes; and
awaiting receipt of an acknowledgement of said local core network node selection message from said selected local core network node.

2. A method according to claim 1, wherein said discovery message comprises a multicast message including a wireless access node identifier.

3. A method according to claim 2, wherein said discovery message acknowledgement is addressed to said wireless access node.

4. A method according to any preceding claim, wherein said local core network selection message is transmitted using identical resource to that which was used for transmission of said discovery message.

5. A method according to any preceding claim, wherein said acknowledgement of said local core network node selection message comprises a configuration request message, seeking configuration information from said wireless access node.

6. A method according to any preceding claim, comprising: monitoring for transmission of a discovery message by another wireless access node and only transmitting a discovery message to said candidate local core network nodes if it is determined that discovery message transmission parameters have been met.

7. A method according to any preceding claim, comprising: monitoring for receipt of an isolated network heartbeat signal from said selected local core network node, and, if it is not received, determining, at said wireless access network node, that access to said local core network is prevented.

8. A method according to any preceding claim, in which said candidate local core network nodes comprise Mobility Management Entity nodes and said wireless access network node comprises an eNodeB.

9. A wireless access network node configured to identify a network node to operate as a local core network for said wireless access network node within a group of mutually reachable wireless access network nodes; said wireless access network node comprising:
determination logic operable to determine that access to a central core network is prevented;
discovery transmission logic operable to transmit a discovery message including an indication that said wireless access node is seeking a local core network to candidate local core network nodes;
discovery reception logic operable to await receipt of a discovery message acknowledgement comprising a selection indicator from at least one of said candidate local core network nodes;
assessment logic operable to assess, based on said selection indicator included in said received discovery message acknowledgement from at least one of said candidate local core network nodes, which of said candidate local core network nodes from which a discovery message acknowledgement has been received is to be selected as said local core network node;
selection transmission logic operable to transmit a local core network node selection message including an indication of said selected local core network node to said candidate local core network nodes; and
acknowledgment reception logic operable to await receipt of an acknowledgement of said local core network node selection message from said selected local core network node.

10. A method of declaring a network node to be a local core network node for a wireless access network node within a group of mutually reachable wireless access network nodes; said method comprising:
determining, at said network node, that access to a central core network by said wireless access network node is prevented;
receiving a discovery message including an indication that said wireless access node is seeking a local core network node to candidate local core network nodes;
transmitting a discovery message acknowledgement comprising a selection indicator to said wireless access node;
receiving a local core network node selection message including an indication of a selected local core network node from said wireless access node, said selected local core network node having been determined by said wireless access node by assessing which of said candidate local core network nodes from which a discovery message acknowledgement has been received based on said selection indicator included in said received discovery message acknowledgement from at least one of said candidate local core network nodes; and
if said network node is said selected local core network node, transmitting an acknowledgement of said local core network node selection message to said wireless access node.

11. A method according to claim 10, wherein said acknowledgement of said local core network node selection message comprises a configuration request message, seeking configuration information from said wireless access node.

12. A method according to claim 10 or claim 11, comprising: monitoring for transmission of a discovery message acknowledgement comprising a selection indicator by another candidate local core network node and only transmitting a discovery message acknowledgement to said wireless access node if it is determined that a discovery message acknowledgement transmission parameter has been met in comparison to received monitored discovery message acknowledgements.

13. A method according to any one of claims 10 to 12, comprising: if said network node is said selected local core network node, transmitting an isolated network heartbeat signal to other nodes in said group of mutually reachable wireless access network nodes.

14. A network node configured to declare itself to be a local core network node for a wireless access network node within a group of mutually reachable wireless access network nodes; said network node comprising:
determination logic configured to determine that access to a central core network by said wireless access network node is prevented;
reception logic operable to receive a discovery message including an indication that said wireless access node is seeking a local core network node to candidate local core network nodes;
transmission logic operable to transmit a discovery message acknowledgement comprising a selection indicator to said wireless access node;
selection reception logic operable to receive a local core network node selection message including an indication of a selected local core network node from said wireless access node, said selected local core network node having been determined by said wireless access node by assessing which of said candidate local core network nodes from which a discovery message acknowledgement has been received based on said selection indicator included in said received discovery message acknowledgement from at least one of said candidate local core network nodes; and
selection transmission logic operable, if said network node is said selected local core network node, to transmit an acknowledgement of said local core network node selection message to said wireless access node.

15. A computer program product configured, when executed on a computer, to perform the method of any one of claims 1 to 8, or claims 10 to 13.
